(19) Europäisches Patentamt
European Patent Office
Office européen des brevets

(11) EP 1 587 716 B1

(12) **EUROPÄISCHE PATENTSCHRIFT**

(45) Veröffentlichungstag und Bekanntmachung des Hinweises auf die Patenterteilung:
**20.06.2007 Patentblatt 2007/25**

(21) Anmeldenummer: **03815027.2**

(22) Anmeldetag: **17.12.2003**

(51) Int Cl.:
***B60R 16/00*** (2006.01) ***B60R 16/02*** (2006.01)

(86) Internationale Anmeldenummer:
**PCT/DE2003/004160**

(87) Internationale Veröffentlichungsnummer:
**WO 2004/067328 (12.08.2004 Gazette 2004/33)**

(54) **SENDE-/ EMPFANGSEINRICHTUNG FÜR EINE AN EIN KOMMUNIKATIONS-NETZWERK ANGESCHLOSSENE KOMPONENTE EINES KRAFTFAHRZEUGS**

TRANSMITTING/RECEIVING DEVICE FOR A COMPONENT OF A MOTOR VEHICLE THAT IS CONNECTED TO A COMMUNICATIONS NETWORK

DISPOSITIF D’EMISSION/RECEPTION DESTINE A UN ELEMENT D’UN VEHICULE AUTOMOBILE, RACCORDE A UN RESEAU DE COMMUNICATION

(84) Benannte Vertragsstaaten:
**DE ES FR GB**

(30) Priorität: **17.01.2003 DE 10301637**

(43) Veröffentlichungstag der Anmeldung:
**26.10.2005 Patentblatt 2005/43**

(73) Patentinhaber: **ROBERT BOSCH GMBH**
**70442 Stuttgart (DE)**

(72) Erfinder:
- **ENDERS, Thorsten**
  **75428 Illingen (DE)**
- **SCHIRMER, Juergen**
  **69124 Heidelberg (DE)**
- **STIEGLER, Frank**
  **71636 Ludwigsburg (DE)**
- **DOSTERT, Klaus**
  **67706 Krickenbach (DE)**

(56) Entgegenhaltungen:
**DE-A1- 10 142 408** **DE-C- 19 913 919**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 587 716 B1

Printed by Jouve, 75001 PARIS (FR)

## Beschreibung

Stand der Technik

Die vorliegende Erfindung betrifft eine Sende-/Empfangseinrichtung für eine an ein Kommunikations-Netzwerk angeschlossene Komponente eines Kraftfahrzeugs, mit mindestens einer Sendeeinheit zum Senden von Daten über das Kommunikations-Netzwerk und mit mindestens einer Empfangseinheit zum Empfangen von Daten über das Kommunikations-Netzwerk. Das Kommunikations-Netzwerk dient zur Übertragung von Daten zwischen der Komponente und weiteren an das Kommunikations-Netzwerk angeschlossenen Komponenten. Die Sende-/ Empfangseinrichtung weist mehrere Sendeeinheiten, wobei jede Sendeeinheit mindestens einen separaten Kanal zur Datenübertragung über das Kommunikations-Netzwerk zur Verfügung stellt, und/ oder mehrere Empfangseinheiten auf, wobei jede Empfangseinheit mindestens einen separaten Kanal zum Empfangen von Daten über das Kommunikations-Netzwerk zur Verfügung stellt.

Ein Kommunikationssystem mit einem Kommunikations-Netzwerk und mehreren daran angeschlossenen Sende-/ Empfangseinrichtungen der oben genannten Art ist aus der DE 199 13 919 C1 bekannt. Dabei werden die Daten über zwei separate Medien übertragen, nämlich zum einen über eine 12 V-Versorgungsleitungsstruktur und zum anderen über eine 42 V-Versorgungsleitungsstruktur.

Auch aus der WO 03/028 305 A2, die für die wirksam benannten Vertragsstaaten als Stand der Technik im Sinne des Art. 54 (3) EPÜ zu berücksichtigen ist, ist ein Kommunikationssystem mit einem Kommunikations-Netzwerk und mehreren daran angeschlossenen Sende-/ Empfangseinrichtungen der oben genannten Art bekannt. Dabei werden die Daten ebenfalls über zwei separate Medien übertragen, nämlich zum einen über eine Datenbusstruktur und zum anderen über eine Versorgungsleitungsstruktur.

Üblicherweise findet eine Kommunikation innerhalb eines Kraftfahrzeugs zwischen verschiedenen Kraftfahrzeug-Komponenten, wie beispielsweise einem Türsteuergerät und einem Sitzsteuergerät, u.a. mit Hilfe eines Bussystems, das beispielsweise nach dem CAN (Controller-Area-Network)-Standard oder nach dem LIN (Local Interconnect Network) arbeitet, statt.

Aus älteren Patentanmeldungen der Anmelderin ist es bekannt, ein Kraftfahrzeug-Bordnetz, das eigentlich zur Energieversorgung von Kraftfahrzeugkomponenten eingesetzt wird, auch zur Übertragung von Daten zwischen den Komponenten einzusetzen (vergleiche DE 101 42 408 und DE 101 42 410, Anmeldetag beider Anmeldungen: 31.08.2001). Dieses Kommunikationsverfahren über das Kraftfahrzeug-Bordnetz zur Energieversorgung wird auch als Powerline Communications bezeichnet.

Für eine Kommunikation zwischen den Komponenten über bestehende Bussysteme und/ oder über Powerline Communications werden leistungsfähige und störresistente Sende-/Empfangseinrichtungen (sogenannte Transceiver) benötigt, welche auch unter erschwerten Bedingungen eine sichere Kommunikation garantieren. Über einen Transceiver wird der Zugang einer Komponente zu einem Kommunikations-Netzwerk realisiert. Störungen, welche die Datenübertragung beeinträchtigen können, können durch leitungsgebundene Impulsstörer, aber auch durch Impulsstörer, welche Störimpulse auf das Bordnetz einstrahlen, hervorgerufen werden. Leitungsgebundene Impulsstörer können durch jeglichen Schaltvorgang eines elektrischen, an das Kraftfahrzeug-Bordnetz angeschlossenen Verbrauchers innerhalb des Kraftfahrzeugs hervorgerufen werden, wie beispielsweise Sitzverstellung, Signalhorn, Beleuchtung und so weiter. Insbesondere müssen die Transceiver auch Nachrichten von sicherheitsrelevanten Anwendungen, wie zum Beispiel Airbag-Zündung oder Bremseingriffe einer Fahrstabilitätsregelung, ohne Verzögerung übermitteln können.

Der vorliegenden Erfindung liegt die Aufgabe zu Grunde, eine zuverlässige, leistungsfähige und störresistente Kommunikation zwischen verschiedenen Komponenten innerhalb eines Kraftfahrzeugs sicherzustellen.

Zur Lösung dieser Aufgabe schlägt die Erfindung ausgehend von der Sende-/ Empfangseinrichtung der eingangs genannten Art vor, dass mit Hilfe der mehreren Sendeeinheiten und/oder mit Hilfe der mehreren Empfangseinheiten der Parallelbetrieb mehrerer Bussysteme auf einem Medium realisiert wird.

Vorteile der Erfindung

Die erfindungsgemäße Sende-/ Empfangseinrichtung (sogenannter Transceiver) unterstützt eine direkte Punkt-zu-Punkt-Kommunikation ohne zeitliche Verzögerung zwischen speziellen Komponenten innerhalb des Kraftfahrzeugs auf sogenannten Sonderkanälen. Durch Verwendung der erfindungsgemäßen Transceiver in einem Kommunikations-Netzwerk ist die Powerline Communications für die parallele Nutzung verschiedener Dienste, Bussysteme und Applikationen geeignet.

Mittels des erfindungsgemäßen Transceivers ist es möglich, die Energieversorgungsleitungen eines Kraftfahrzeug-Bordnetzes, das eigentlich zur Energieversorgung der Kraftfahrzeugkomponenten eingesetzt wird, für die integrierte Übertragung von Energie- und Informationen zu verwenden, wodurch separate Datenleitungen, wie zum Beispiel bei einem CAN-Bus, eingespart werden. Durch die Verwendung eines geeigneten Übertragungsverfahrens in Verbindung mit einem Verfahren zur Signalrückgewinnung erweist sich das Gesamtsystem als weitestgehend unempfindlich gegenüber additiven Störungen, welche durch Schaltvorgänge der an das Bordnetz angeschlossenen Komponenten hervorgerufen werden.

Ein weiterer wichtiger Aspekt des erfindungsgemäßen Transceivers ist die Bereitstellung von Sonderkanälen zur Übertragung von sicherheitsrelevanten Nachrichten. Dies ermöglicht eine sofortige Übertragung einer Nachricht ohne eine zeitliche Verzögerung durch eventuell erst abzuwartende Zeitzyklen auf Protokollebene eines Multi-User-Bussystems mit nur einem Kanal. Durch die Unterstützung des Parallelbetriebs mehrerer Bussysteme auf einem Medium gelingt eine weitere Einsparung an Datenleitungen, da es nun möglich ist, zum Beispiel den Datenverkehr von LIN- und CAN-Bussystemen zeitgleich über dasselbe Medium abzuwickeln. So kann Powerline-Communications unter anderem gleichzeitig als Rückfallebene für verschiedene Bussysteme genutzt werden, um bei einem Ausfall eines der Bussysteme die Datenübertragung über das Kraftfahrzeug-Bordnetz aufrecht zu erhalten. Die Trennung der einzelnen Kanäle für die verschiedenen Bussystem kann entweder über orthogonale Codes oder über den jeweils genutzten Frequenzbereich erfolgen. Werden zudem die verwendeten Signalformen orthogonal gewählt, so können die Trägersignale der einzelnen Kanäle sehr dicht nebeneinander gelegt werden.

Gemäß einer vorteilhaften Weiterbildung der vorliegenden Erfindung wird vorgeschlagen, dass mindestens einer der Kanäle zur Übertragung und/oder zum Empfang von Daten über ein Kraftfahrzeug-Bordnetz vorgesehen ist, wobei das Kraftfahrzeug-Bordnetz zur Energieversorgung der Komponente und zur Übertragung von Daten zwischen der Komponente und weiteren an das Kraftfahrzeug-Bordnetz angeschlossenen Komponenten dient. Ein solches Kommunikationsverfahren wird auch als Powerline Communications bezeichnet.

Gemäß einer bevorzugten Ausführungsform der vorliegenden Erfindung wird vorgeschlagen, dass die Übertragung und/oder der Empfang von Daten über das Kraftfahrzeug-Bordnetz als Rückfallebene ausgebildet ist, um bei einem Ausfall von mindestens einem der Kanäle, der zur Übertragung und/oder zum Empfang von Daten über ein anderes Kommunikations-Netzwerk als das Kraftfahrzeug-Bordnetz vorgesehen ist, die Datenübertragung aufrecht zu erhalten. In vorteilhafter Weise dient das Kraftfahrzeug-Bordnetz zur Übertragung von sicherheitsrelevanten Daten.

Die Trennung der Kanäle untereinander erfolgt vorzugsweise durch eine Verschlüsselung der zu übertragenen Daten mittels orthogonaler Codes. Alternativ oder zusätzlich wird vorgeschlagen, dass die Trennung der Kanäle untereinander durch eine Modulation der zu übertragenden Daten auf unterschiedliche Trägerfrequenzen erfolgt. Die Trennung der Kanäle kann aber auch mittels eines CDMA (Code Division Multiple Access) -Verfahrens oder mittels eines FDMA (Frequency Division Multiple Access)-Verfahrens erfolgen. Bei dem CDMA-Verfahren wird die Frequenz eines Kanals in Abhängigkeit von einem vorgegebenen Muster (sog. Code) variiert, so dass das Signal nur von einem Empfänger aufgefangen werden kann, der den Code kennt, so dass der Empfänger der variierenden Frequenz des Senders folgen kann. Die Frequenzen der Kanäle werden mittels unterschiedlicher Codes variiert. Über die verschiedenen Codes können die einzelnen Kanäle also voneinander getrennt werden. Bei dem FDMA-Verfahren wird ein für die Übertragung von Informationen genutzter Frequenzbereich entsprechend der Anzahl der Kanäle in Teil-Frequenzbereiche unterteilt, und jedem Kanal wird ein eigener Teil-Frequenzbereich zugeordnet. Auf diese Weise kann eine gegenseitige Beeinträchtigung der Kanäle verhindert werden.

Gemäß einer bevorzugten Ausführungsform der vorliegenden Erfindung wird vorgeschlagen, dass zur Modulation der zu übertragenden Daten auf eine Trägerfrequenz eine differenzielle binäre 2-Phasen Umtastung (DBPSK) eingesetzt wird. Alternativ wird vorgeschlagen, dass zur Modulation der zu übertragenden Daten auf eine Trägerfrequenz eine differenzielle Quadratur Phasen Umtastung (DQPSK) eingesetzt wird.

Zeichnungen

Weitere Merkmale, Anwendungsmöglichkeiten und Vorteile der Erfindung ergeben sich aus der nachfolgenden Beschreibung von Ausführungsbeispielen der Erfindung, die in den Zeichnungen dargestellt sind. Dabei bilden alle beschriebenen oder dargestellten Merkmale für sich oder in beliebiger Kombination den Gegenstand der Erfindung unabhängig von ihrer Zusammenfassung in den Patentansprüchen oder deren Rückbeziehung sowie unabhängig von.ihrer Formulierung bzw. Darstellung in der Beschreibung bzw. in der Zeichnung. Es zeigen:

Figur 1 ein Blockschaltbild einer Sendeeinheit einer erfindungsgemäßen Sende-/Empfangseinrichtung gemäß einer bevorzugten Ausführungsform;

Figur 2 ein Blockschaltbild einer Empfangseinheit einer erfindungsgemäßen Sende-/Empfangseinrichtung gemäß einer bevorzugten Ausführungsform;

Figur 3 die Bitfehlerwahrscheinlichkeit $P_b$ verschiedener Verfahren zur Datenübertragung über ein Kraftfahrzeug-Bordnetz in Abhängigkeit des Signal-Zu-Rausch-Verhältnisses $E_b/N_0$;

Figur 4 einen Vergleich einer Synchronisations-Fehlerrate mit und ohne eine zusätzliche Manchester-Codierung;

Figur 5 verschiedene Barker-Folgen zur Rahmen- und Übertragungszyklus-Synchronisation;

Figur 6 einen Vergleich der Synchronisations-Fehlerrate mit einer Barker-Folge der Länge L=13 und einer modifizierten Barker-Folge mit der Länge L=14;

Figur 7 eine Rahmen- und Übertragungszyklus-Synchronisation mit einer Barker-Folge der Länge L=7 und einer daraus konstruierten modifizierten Barker-Folge der Länge L=14;

Figur 8 eine erfindungsgemäße Sende-/Empfangseinrichtung mit n durch die Frequenzlage getrennte Sonderkanäle und einem Multi-User-Kanal;

Figur 9 ein erfindungsgemäßes Kommunikations-System gemäß einer bevorzugten Ausführungsform; und

Figur 10 eine erfindungsgemäße Sende-/Empfangseinrichtung des Kommunikations-Systems aus Figur 9 gemäß einer bevorzugten Ausführungsform.

Beschreibung der Ausführungsbeispiele

Eine Sende-/Empfangseinrichtung (sogenannter Transceiver) ist unterteilt in einen Sendeteil und einen Empfangsteil, welche beide auf demselben Halbleiter-Trägerelement (Platine) integriert sein können. Weiterhin lässt sich der Transceiver in einen Digital- und einen Analogteil unterteilen. Der Sendeteil des erfindungsgemäßen Transceivers umfasst mehrere Sendeeinheiten. Alternativ oder zusätzlich umfasst der Empfangsteil des erfindungsgemäßen Transceivers mehrere Empfangseinheiten.

Jede Sendeeinheit stellt mindestens einen separaten Kanal zur Datenübertragung über ein Kommunikations-Netzwerk zur Verfügung. Jede Empfangseinheit stellt mindestens einen separaten Kanal zum Empfangen von Daten über das Kommunikations-Netzwerk zur Verfügung. Über den erfindungsgemäßen Transceiver können Komponenten eines Kraftfahrzeugs, die an das Kommunikations-Netzwerk angeschlossen sind, Zugang zu dem Netzwerk erhalten.

In Figur 1 ist eine Sendeeinheit des Sendeteils des erfindungsgemäßen Transceivers dargestellt und in ihrer Gesamtheit mit dem Bezugszeichen 1 bezeichnet. Über einen Anschluss 2 ist die Sendeeinheit 1 an eine Kraftfahrzeug-Komponente angeschlossen. Über den Anschluss 2 werden der Sendeeinheit 1 Daten zugeführt, welche in der Sendeeinheit 1 aufbereitet und in ein Kommunikations-Netzwerk eingekoppelt werden. Innerhalb eines Digitalteils 3 erfolgt eine differenzielle Codierung der zu sendenden Daten. Insbesondere wird dort eine differenzielle 2-Phasen-Abtastung ausgeführt. Anschließend wird mittels einer Look-up-Tabelle 4, in welcher ein tabellierter Sinus abgelegt ist, in einem Funktionsblock 5 eine digitale Modulation des Signals ausgeführt. Die in der Look-up-Tabelle 4 abgelegten Werte des tabellierten Sinus bilden das Trägersignal für die Modulation. Danach wird das digital modulierte Signal mittels eines DA-Wandlers 6 in den analogen Bereich umgesetzt, wodurch das stufige Trägersignal eine Glättung erfährt.

Im weiteren Verlauf erfährt das Analogsignal in einem Funktionsblock 7 eine Bandpass-Filterung, bevor es in einem Funktionsblock 8 in einen für die Signalübertragung zu nutzenden Frequenzbereich gemischt wird. Durch die Bandpass-Filterung in dem Funktionsblock 7 werden parasitäre Signale, die außerhalb des für die Signalübertragung genutzten Frequenzbereiches liegen, herausgefiltert. Die Mischung in den Arbeitsbereich erfolgt mittels eines spannungsgesteuerten Oszillators (VCO; Voltage Controlled Oscillator). Durch die Mischung in den Arbeitsbereich mittels des Oszillators VCO in dem Funktionsblock 8 wird das Signal in den Hochfrequenz (HF)-Bereich verschoben. Nach der Aufwärtsmischung erfolgt in einem Funktionsblock 9 eine Tiefpass-Filterung. Im Rahmen der Tiefpass-Filterung werden Signalanteile mit einer Frequenz, die in dem vorliegenden Ausführungsbeispiel oberhalb von etwa 250 MHz liegen, herausgefiltert. Danach erfolgt in einem Funktionsblock 10 die Einkopplung des Signals in das Kommunikations-Netzwerk. In dem vorliegenden Ausführungsbeispiel wird das einzukoppelnde Signal zunächst in einem Verstärker 11 verstärkt und anschließend in einem Funktionsblock 12 induktiv in das Kommunikations-Netzwerk eingekoppelt.

In dem vorliegenden Ausführungsbeispiel ist das Kommunikations-Netzwerk als ein Kraftfahrzeug-Bordnetz ausgebildet, das eigentlich zur Energieversorgung der daran angeschlossenen Kraftfahrzeug-Komponenten dient. Mittels des erfindungsgemäßen Transceivers kann das Kraftfahrzeug-Bordnetz zusätzlich auch zur Übertragung von Informationen zwischen den an das Bordnetz angeschlossenen Komponenten eingesetzt werden. Die Informationsübertragung über ein Kraftfahrzeug-Bordnetz wird auch als Powerline Communications bezeichnet.

In Figur 2 ist eine Empfangseinheit des Empfangsteils des erfindungsgemäßen Transceivers dargestellt und in ihrer Gesamtheit mit dem Bezugzeichen 20 bezeichnet. Mittels eines induktiven Koppelelements 21 wird ein über das Kommunikations-Netzwerk übertragenes Signal aus dem Netzwerk induktiv ausgekoppelt. Auch bei diesem Ausführungsbeispiel ist das Kommunikations-Netzwerk vorzugsweise als ein Kraftfahrzeug-Bordnetz ausgebildet. Anschließend erfolgt mittels eines Verstärkers 22 eine Pegelanpassung des ausgekoppelten Signals zur weiteren Verarbeitung. Danach erfolgt mittels eines spannungsgesteuerten Oszillators VCO in einem Funktionsblock 23 eine Abwärtsmischung aus dem Frequenzbereich der Signalübertragung in den Arbeitsbereich der Empfangseinheit 20.

Daran schließt sich in einem Funktionsblock 24 eine Bandpass-Filterung und in einem Funktionsblock 25 eine AD-Wandlung für die Weiterverarbeitung in dem Digitalteil an. In einem Demodulator 26 erfolgt die Demodulation des Digitalsignals. Daran schließt sich in einem Funktionsblock 27 eine Datenrückgewinnung umfassend einen Korrelator 28 und eine differenzielle Dekodierung des empfangenen Signals an. Über einen Anschluss 29 der Empfangseinheit 20 werden die von dem Kraftfahrzeug-Bordnetz empfangenen und aufbereiteten Signale an die angeschlossene Kraftfahrzeugkomponente ausgegeben.

Wenn in dem Kraftfahrzeug-Netzwerk mehrere Bussysteme parallel betrieben werden, werden alle Sendeeinheiten 1 und Empfangseinheiten 20 in dem Empfangsteil und dem Sendeteil des Transceivers entsprechend oft dupliziert. Wird die gleiche Frequenz für die Träger verwendet, müssen die verschiedenen Kanäle durch Verwendung orthogonaler Codes getrennt werden. Eine andere Möglichkeit ist die Trennung der Kanäle durch Verwendung unterschiedlicher Trägerfrequenzen. Diese müssen einen entsprechend großen Abstand innerhalb des zur Verfügung stehenden Frequenzbandes aufweisen, um eine mögliche gegenseitige Störung der einzelnen Kanäle zu verhindern. Werden die für die Übertragung verwendeten Signalformen im Frequenzbereich orthogonal zueinander gewählt, können die einzelnen Trägerfrequenzen relativ dicht zueinander gelegt werden.

Zur Modulation (Funktionsblöcke 4 und 5 in Figur 1) kommt ein relativ einfaches Modulationsverfahren zur Anwendung, da der Kanal bei Powerline Communications genug Bandbreite zur Verfügung stellt und sich als relativ störungsfrei erweist. Aufgrund eines maximalen euklid'schen Abstandes von 2 im Signal-Raum-Diagramm und der damit verbundenen sehr hohen Unempfindlichkeit gegenüber additiven Störungen, wird die differenzielle binäre 2-Phasen-Umtastung (DBPSK; Differencial Binary 2-Phase-Shift Keying) zur Modulation eingesetzt. Es ist jedoch auch an den Einsatz einer differenziellen Quadratur Phasen-Umtastung (DQPSK; Differencial Quadratur Phase Shift Keying) gedacht. Ein Vorteil des differenziellen Modulationsverfahrens ist, dass für die Informationsgewinnung allein die Phasendifferenz zwischen zwei aufeinander folgenden Bits ausschlagend ist, dass heißt es wird kein Bezugsträger benötigt. Damit muss ein Bezugsträger auch nicht übertragen werden.

Einen Überblick über die Bitfehlerwahrscheinlichkeit $P_b$ verschiedener Modulationsverfahren bietet Figur 3. Konkret sind in Figur 3 die Modulationsverfahren ASK (Amplitude Shift Keying) unipolar und bipolar, FSK (Frequency Shift Keying), PSK (Phase Shift Keying) sowie DPSK (Differencial Phase Shift Keying) dargestellt. Bei diesen Verfahren handelt es sich um zweistufige Modulationsverfahren. Die Bitfehlerwahrscheinlichkeit $P_b$ ist abhängig von dem Quotienten aus der Bit-Energie $E_b$ und der Rausch-Leistungs-Dichte $N_0$ aufgetragen. Der Quotient $E_b/N_0$ wird auch als Signal-zu-Rausch-Abstand bezeichnet und ist in der Einheit dB aufgetragen.

Der Einsatz eines mehrstufigen Modulationsverfahrens ist zwar möglich, scheint aufgrund der in einem Kraftfahrzeug-Bordnetz zur Datenübertragung zur Verfügung stehenden Bandbreite jedoch nicht erforderlich. Durch einen Verzicht auf ein mehrstufiges Modulationsverfahren können Mehrkosten für den Systemaufbau eingespart werden. Zudem arbeiten zweistufige Modulationsverfahren wesentlich robuster als höherstufige Modulationsverfahren; höherstufige Modulationsverfahren sind in der Regel störanfälliger als ihre niederstufigeren Varianten.

Die Modulation selbst und die differenzielle Codierung wird digital mittels der Look-up-Tabelle 4 realisiert. Dabei handelt es sich um eine Tabelle mit Abtastwerten eines Sinussignals. Diese werden zyklisch ausgelesen und in dem Funktionsblock 5 mit den Bits des zu übertragenden Signals multipliziert. Damit ist eine "ideale" Modulation ohne Phasenversatz zwischen Trägersignal und zu übertragenden Datenbits gewährleistet.

Mittels des Korrelators 28 werden die mit Rauschen überlagerten Nutzsignale wieder entdeckt. Zur Korrelation können unter anderem spezielle Folgen verwendet werden, die als Barker-Folgen bezeichnet werden (vergleiche R. H. Barker: Group Synchronization of Binary Digital Systems. In Communication Theory, W. Jackson, Butterworth, 1953). Diese zeichnen sich durch ein Haupt-Nebenmaximum-Verhältnis (HNV) aus, welches der Anzahl L der Bits der Folge entspricht. Es gilt also:

$$HNV = L \qquad (1)$$

Barker-Folgen weisen eine Länge L=2, 3, 4, 5, 7, 11 oder 13 auf. In R. Turyn, J. Storer: On Binary Sequences, Proceedings of American Mathematical Society, Nr. 12, 1961 wird gezeigt, dass es keine weiteren Barker-Folgen mit ungerader Länge gibt. In L. D. Baumert: Cyclic Difference Set, Springer Verlag, Berlin Heidelberg, 1971 erfolgt der Beweis, dass es keine Barker-Folgen mit geradzahliger Länge größer als 4 gibt. Aufgrund ihres sehr hohen HNV eignen sich diese Folgen unter anderem für die verschiedensten Synchronisationsaufgaben.

Bei der Synchronisation mittels eines Markers besteht das Problem, dass die Wahrscheinlichkeit für eine Fehlsynchronisation auch im Falle eines rauschfreien Kanals immer größer 0 ist, solange der Marker aus Bestandteilen des für die nachfolgenden Daten zur Verfügung stehenden Zeichenalphabets kombiniert werden kann. Dies kann nur vermieden werden, indem für die Datenübertragung ein Alphabet verwendet wird, mit dessen Bestandteilen es nicht möglich ist, den Marker zu konstruieren. Dies gilt vor allem auch für den Fall des Überlappens zweier Codewörter. Enthält das Alphabet zum Beispiel die beiden Wörter $a=a_1 \ldots a_n$ und $b=b_1 \ldots b_n$, so darf sich auch nicht durch Kombination von $a_j \ldots a_n b_1 \ldots b_{j-1}$ mit $1<j\leq n$ der Marker konstruieren lassen. Bei der Verwendung von Barker-Folgen zur Rahmensynchronisation kann dies unter anderem durch die Verwendung des Manchester-Codes für die Daten erreicht werden. Dieser zeichnet sich dadurch aus, dass maximal für zwei Bitdauern, ausgehend von dem verwendeten Manchester-Code, ein Zustand gehalten wird. Danach erfolgt zwangsläufig ein Zustandswechsel. Barker-Folgen mit einer Länge L > 4 enthalten jedoch generell mindestens eine Abfolge von drei gleichen Zuständen.

Allgemein lässt sich die Wahrscheinlichkeit für eine Fehlsynchronisation nach folgender Gleichung berechnen:

$$P_r\left(f \middle| RDL\right) = \sum_{i=1}^{\left[\frac{N}{L}-1\right]} \frac{(-1)^{i+1}}{i+1} \binom{N-L-(L-1)i}{i} \cdot M^{-Li} \qquad (2)$$

Hierbei steht M für die Anzahl der Symbole des verwendeten Modulationsverfahrens. Im Falle der DBPSK gilt also M=2. L entspricht der Länge des Synchronisationswortes im Allgemeinen und hier im Speziellen der Länge der Barker-Folge. N repräsentiert die Gesamtlänge des zu übermittelnden Datenrahmens bestehend aus L und der Länge D des Datenblocks (N=L+D).

In Figur 4 ist der Unterschied zwischen einem Datenwortzeichenalphabet, welches das Synchronisationswort enthalten kann, und einem Alphabet, bei welchem dies durch eine zusätzliche Manchester-Codierung ausgeschlossen ist, dargestellt. Die geringere Wahrscheinlichkeit für eine Fehlsynchronisation durch den Einsatz der Manchester-Codierung wird jedoch auf Kosten einer Halbierung der möglichen Datenrate erkauft. Wie aus Figur 4 ersichtlich ist, spielt dies bei starkem Rauschen jedoch keine Rolle mehr, da die Wahrscheinlichkeit der Verfälschung des zu sendenden Datenwortes durch Rauschen bedeutend größer ist als die Wahrscheinlichkeit einer bedingten Fehlsynchronisation. Bei geringem Rauschen macht sich dies jedoch deutlich bemerkbar. Insgesamt wurden für jeden ganzzahligen Wert des Signal-Rausch-Verhältnisses (SNR; Signal-Noise-Ratio) zwischen -6 bis +6 dB 1.000 Simulationen in die Auswertung mit einbezogen. Es wurden zufällig 130 Bits erzeugt. Innerhalb dieses Bitstroms wurde zufällig das 14-bit lange Synchronisationswort platziert. Anschließend erfolgte eine PSK-Modulation, die Addition eines Rauschens mit entsprechendem SNR und die Demodulation. Danach erfolgte die Synchronisation. Ab einem SNR von etwa 4 dB ergab sich für die Synchronisation des Datenwortes mit einer zusätzlichen Manchester-Codierung kein Fehler mehr. Dies entspricht in der logarithmischen Darstellung einer Synchronisationsfehlerrate SFR von -∞. Aus diesem Grund sind in der Figur 4 für ein SNR von 4, 5 und 6 dB keine Datenpunkte eingezeichnet.

Zur Berechnung der Position des Beginns des Synchronisationswortes können sowohl die Korrelationsmethode als auch die Maximum-Likelihood-Regel (sogenannte ML Rule) nach Massey herangezogen werden. Nach J. L. Massey: Optimum Frame Synchronization, IEEE Transactions on Communications, Vol. COM-20, Nr. 2, 1972 gilt dabei die nachfolgende Gleichung:

$$L_H(\mu) = \sum_{i=0}^{L-1} y_{i+\mu} \cdot S_i - \frac{N_0}{2} \sum_{i=0}^{L-1} \ln\left(\cosh\left(\frac{2\sqrt{E_S} \cdot y_{i+\mu}}{N_0}\right)\right) \qquad (3)$$

Geht man von einem Signal-zu-Rausch-Abstand von $\frac{E_S}{N_0} << 1$ aus, so ergibt sich folgende Näherung:

$$L_H(\mu) = \sum_{i=0}^{L-1} \left(y_{i+\mu} \cdot S_i - \sqrt{E_S}\left|y_{i+\mu}\right|\right) \qquad (4)$$

Hierbei repräsentieren die Variablen $S_i$ die Elemente des Synchronisationswortes und die Variablen $y_i$ die Elemente des empfangenen Datenwortes. Der zweite Teil der Gleichung trägt dabei dem durch die Korrelation des Synchronisationswortes und des Datenwortes entstehenden Anteil des Korrelationswertes Rechnung. Hiermit soll der Ausgangswert des Korrelators 28 entsprechend korrigiert werden.

Die Korrelationsregel ergibt sich aus Gleichung (4) unter Vernachlässigung des Korrekturterms:

$$L_H(\mu) = \sum_{i=0}^{L-1} y_{i+\mu} \cdot S_i \qquad (5)$$

Speziell für die differentielle binäre 2-Phasen-Umtastung (DBPSK) ergibt sich die folgende Berechnungsvorschrift entsprechend der Maximum-Likelihood-Regel:

$$L_H(\mu) = \sum_{i=0}^{L-1} \left( \frac{1}{\sqrt{E_S}} y_{i+\mu} \cdot S_i - \left| y_{i+\mu} \right| \right) \qquad (6)$$

Barker-Folgen können vor allem für die Rahmen- und die Übertragungszyklus-Synchronisation zum Einsatz kommen. Eine Idee ist hierbei die Verwendung derselben Barker-Folge sowohl für die Rahmen- als auch für die Übertragungszyklussynchronisation. Hierzu wird zum Beispiel eine Barker-Folge der Länge L=7 für die Rahmensynchronisation verwendet. Für die Synchronisation auf den Beginn des Übertragungszyklus wird aus der gleichen Folge eine etwas modifizierte Folge konstruiert, indem zwei derselben Folgen aneinander gereiht werden. Die zweite Folge wird jedoch von der Wertigkeit der einzelnen Bits invertiert. Dies ist in Figur 5 dargestellt.

In Figur 5a ist eine Barker-Folge der Länge L=7 für die Rahmensynchronisation dargestellt. In Figur 5b ist eine Barker-Folge für die Übertragungszyklus-Synchronisation dargestellt, wobei die ersten sieben Bits der Barker-Folge aus Figur 5b der Barker-Folge aus Figur 5a entsprechen. Die nachfolgenden sieben Bits der Barker-Folge aus Figur 5b entsprechen den invertierten ersten sieben Bit der Folge. Dies hat den Vorteil, dass in der Empfangseinheit nur die Barker-Folge der Länge L=7 abgelegt werden muss. Die Korrelation in dem Korrelator 28 erfolgt nur anhand der Barker-Folge aus Figur 5a. Durch eine logische Verknüpfung in der Empfangseinheit kann aus der Barker-Folge aus Figur 5a die Barker-Folge für die Übertragungszyklus-Synchronisation gemäß Figur 5b ermittelt werden.

Für die Bildung der Korrelator-Ausgangsfunktion wird bei der Synchronisation auf den Beginn des Übertragungszyklus eine zusätzliche Addition eingeführt. In einem ersten Schritt erfolgt die Korrelation mit der Barker-Folge. Dies ergibt das Ergebnis x(k). Danach wird eine modifizierte Ausgangsfunktion $x_{mod}$ (k) nach folgender Regel berechnet:

$$x_{mod}(k) = x(k) - x(k+L) \qquad (7)$$

Bei Korrelation der Barker-Folge mit dem invertierten Anteil in der modifizierten Barker-Folge ergibt sich die gleiche Ausgangsfunktion wie bei der Kreuzkorrelation der Barker-Folge, jedoch in den negativen Zahlenbereich gespiegelt. Mit der Berechnungsvorschrift nach Gleichung (7) ergibt sich also für das Vorliegen der modifizierten Barker-Folge der gleiche Funktionsverlauf wie für die Kreuzkorrelation der Barker-Folge, jedoch mit doppelten Amplitudenwerten. Somit sind die Marker für die Rahmensynchronisation und für die Übertragungszyklus-Synchronisation mittels eines einfachen Schwellwertentscheiders zu unterscheiden.

In Figur 6 ist ein Vergleich zwischen der Synchronisation mit einer ursprünglichen Barker-Folge und mit einer entsprechend der oben beschriebenen Vorgehensweise modifizierten Barker-Folge nahezu gleicher Länge dargestellt (eine identische Länge kann nicht erreicht werden, da es - wie bereits oben erwähnt - nur ungeradzahlige Barker-Folgen mit L > 4 gibt). In Figur 6 ist zu sehen, dass die Synchronisation mit der ursprünglichen Barker-Folge und mit der modifizierten Barker-Folge ähnlicher Länge in etwa die gleichen Ergebnisse liefert. In Figur 6 ist die Synchronisation mit einer herkömmlichen Korrelationsregel (Soft-Correlation Rule), für die Maximum-Likelihood-Regel (ML-Rule) sowie für die modifizierte Maximum-Likelihood-Regel (modified ML-Rule) dargestellt.

In Figur 7 sind Ergebnisse für die Rahmensynchronisation und die Übertragungszyklus-Synchronisation mit einer Barker-Folge der Länge L=7 und einer daraus konstruierten modifizierten. Barker-Folge mit der Länge L=14 dargestellt. Es ist deutlich zu erkennen, dass auch die Rahmensynchronisation für ein SNR>6 dB immer gelingt. Als weitere Möglichkeit für die Synchronisation bieten sich auch sogenannte Lindner-Folgen an (vgl. H. D. Lüke: Korrelationssignale, Springer-Verlag Berlin/Heidelberg 1992). Zusätzlich wurde eine Manchester-Codierung durchgeführt, um eine fehlerfreie Synchronisation ermöglichen zu können.

Bei dem erfindungsgemäßen Transceiver können einer oder mehrere der Kanäle als Sonderkanäle für die Übermittlung extrem sicherheitsrelevanter Botschaften oder für die Diagnose des Kommunikations-Netzwerkes beziehungsweise der Datenübertragung über das Netzwerk reserviert werden. Für die Einrichtung der Sonderkanäle bieten sich verschiedene Vorgehensweisen an, um eine gegenseitige Beeinflussung der Kanäle zu vermeiden. Eine Vorgehensweise ist die Verwendung orthogonaler Codes auf der gleichen Frequenzlage. Dies kann jedoch aufgrund der erforderlichen Länge der Codewörter problematisch sein, da damit eine hochdatenratige Datenübermittlung erschwert wird. Eine andere Vorgehensweise ist die Verwendung von im Frequenzspektrum orthogonalen Signalformen.

Der Empfang der speziellen Nachrichten kann mit sogenannten Matched-Filtern realisiert werden. Diese können entweder digital oder mit Hilfe von sogenannten SAW (Surface Acoustic Wave)-Filtern (sogenannten Oberflächenwellen-Filtern) umgesetzt werden. Diese können optimal angepasst werden. Ein weiterer Vorteil von SAW-Filtern ist, dass es sich um passive Bauteile handelt. Damit verbrauchen sie keinen Ruhestrom. Zur Absicherung der Detektion können auch für diese Nachrichten Barker-Folgen verwendet werden. Es muss jedoch allgemein sichergestellt sein, dass es nicht zu einer Fehlauslösung kommen kann. Dies stellt sehr hohe Anforderungen an das Gesamtsystem. Hier könnten für die Signalisierung Barker-Folgen mit großer Länge Einsatz finden, da sie - wie bereits erwähnt - ein maximales HNV aufweisen. Um den Einfluss kurzzeitiger Störer zu minimieren, ist hierbei auf eine ausreichend große Bitdauer der einzelnen verwendeten Bits zu achten. Zusätzlich können für die verschiedenen Sonderkanäle orthogonale oder auch invertierte Barker-Signale verwendet werden.

Figur 8 zeigt eine grobe schematische Darstellung der oben beschriebenen Möglichkeiten. Dort ist ein erfindungsgemäßer Transceiver 30 mit n durch die Frequenzlage getrennten Sonderkanälen $f_1$ ... $f_n$ und einem sogenannten Multi-User-Kanal $f_{n+l}$ dargestellt. Zusätzlich sollte für jeden Sonderkanal eine zyklische Zustandsabfrage erfolgen, um jederzeit über den Zustand der Komponente, welche über den Transceiver Zugang zu dem Kommunikations-Netzwerk erhält, informiert zu sein und somit rechtzeitig auf einen möglichen Defekt reagieren zu können. Diese Abfrage könnte beispielsweise auch über den Multi-User-Kanal $f_{n+1}$ erfolgen.

In der vorliegenden Patentanmeldung wird ein Transceiver zur Nutzung im Rahmen der Powerline Communications als Kommunikationsmedium vorgeschlagen. Ein wesentlicher Aspekt ist hierbei die Einführung von Sonderkanälen für sicherheitsrelevante Nachrichten, welche ohne jeglichen zeitlichen Verzug bedingt durch ein Multi-User-Protokoll übermittelt werden müssen. Für die Signalisierung auf diesen Kanälen werden unter anderem Barker-Folgen vorgeschlagen. Weiterhin werden diese Folgen auch für Synchronisationsaufgaben auf dem Multi-User-Kanal vorgeschlagen. Sonderkanäle und der Multi-User-Kanal können sowohl durch orthogonale Codes als auch durch Benutzung orthogonaler Frequenzlagen voneinander getrennt werden.

In Figur 9 ist ein erfindungsgemäßes Kommunikations-System in einem Kraftfahrzeug dargestellt. Das System umfasst ein Kraftfahrzeug-Bordnetz 34 und mehrere daran angeschlossene Kraftfahrzeug-Komponenten 31. Das Bordnetz 34 dient zur Energieversorgung der Kraftfahrzeug-Komponenten 31. Außerdem dient das Kraftfahrzeug-Bordnetz 34 zur Informationsübertragung zwischen den Komponenten 31. Zu diesem Zweck verfügen die Komponenten 31 über eine Sende/Empfangseinrichtung 30 (Transceiver), über welche sie Zugang zu dem Kraftfahrzeug-Bordnetz haben. Diese Art der Datenübertragung wird auch als Powerline Communications bezeichnet.

In Figur 10 ist ein erfindungsgemäßer Transceiver 30 im Ausschnitt dargestellt. Der Transceiver 30 umfasst einen Sendeteil 32 und einen Empfangsteil 33. Von der an den Transceiver 30 angeschlossenen Komponente 31 empfängt der Sendeteil 32 über das Kraftfahrzeug-Bordnetz 34 zu übertragende Daten über den Anschluss 2. Von dem Empfangsteil 33 aus dem Kraftfahrzeug-Bordnetz ausgekoppelte und aufbereitete Daten werden über den Anschluss 29 an die an den Transceiver 30 angeschlossene Komponente 31 übermittelt.

Der Sendeteil 32 des erfindungsgemäßen Transceivers 30 umfasst mehrere Sendeeinheiten 1a, 1b, ... 1m. Ebenso umfasst der Empfangsteil 33 des Transceivers 30 mehrere Empfangseinheiten 20a, 20b, ... 20n. Sowohl die Sendeeinheiten 1 als auch die Empfangseinheiten 20 sind über einen induktiven Koppler 12, 21 (vgl. Figur 1) an das Kraftfahrzeug-Bordnetz 34 angeschlossen.

## Patentansprüche

1. Sende-/ Empfangseinrichtung (30) für eine an ein Kommunikations-Netzwerk (34) angeschlossene Komponente (31) eines Kraftfahrzeugs, mit mindestens einer Sendeeinheit (1) zum Senden von Daten über das Kommunikations-Netzwerk (34) und mit mindestens einer Empfangseinheit (20) zum Empfangen von Daten über das Kommunikations-Netzwerk (34), wobei das Kommunikations-Netzwerk (34) zur Übertragung von Daten zwischen der Komponente (31) und weiteren an das Kommunikations-Netzwerk (34) angeschlossenen Komponenten (31) dient, wobei die Sende-/ Empfangseinrichtung (30) mehrere Sendeeinheiten (1a, 1b, ... 1m) aufweist, wobei jede Sendeeinheit (1a, 1b, ... 1m) mindestens einen separaten Kanal zur Datenübertragung über das Kommunikations-Netzwerk (34) zur Verfügung stellt, und/ oder die Sende-/Empfangseinrichtung (30) mehrere Empfangseinheiten (20a, 20b, ... 20n) aufweist, wobei jede Empfangseinheit (20a, 20b, ... 20n) mindestens einen separaten Kanal zum Empfangen von Daten über das Kommunikations-Netzwerk (34) zur Verfügung stellt, **dadurch gekennzeichnet, dass** mit Hilfe der mehreren Sendeeinheiten (1a, 1b, ..., 1m) und/oder mit Hilfe der mehreren Empfangseinheiten (20a, 20b, ..., 20n) der Parallelbetrieb mehrerer Bussysteme auf einem Medium realisiert wird.

2. Sende-/ Empfangseinrichtung (30) nach Anspruch 1, **dadurch gekennzeichnet, dass** mindestens einer der Kanäle zur Übertragung und/ oder zum Empfang von Daten über ein Kraftfahrzeug-Bordnetz (34) vorgesehen ist, wobei das Kraftfahrzeug-Bordnetz (34) zur Energieversorgung der Komponente und zur Übertragung von Daten zwischen der Komponente (31) und weiteren an das Kraftfahrzeug-Bordnetz (34) angeschlossenen Komponenten (31) dient.

3. Sende-/ Empfangseinrichtung (30) nach Anspruch 2, **dadurch gekennzeichnet, dass** die Übertragung und/ oder der Empfang von Daten über das Kraftfahrzeug-Bordnetz (34) als Rückfallebene ausgebildet ist, um bei einem Ausfall von mindestens einem der Kanäle, der zur Übertragung und/oder zum Empfang von Daten über ein anderes Kommunikations-Netzwerk als das Kraftfahrzeug-Bordnetz (34) vorgesehen ist, die Datenübertragung aufrecht zu erhalten.

4. Sende-/ Empfangseinrichtung (30) nach Anspruch 2, **dadurch gekennzeichnet, dass** das Kraftfahrzeug-Bordnetz (34) zur Übertragung von sicherheitsrelevanten Daten dient.

5. Sende-/ Empfangseinrichtung (30) nach einem der Ansprüche 1 bis 4, **dadurch gekennzeichnet, dass** die Trennung der Kanäle untereinander durch eine Verschlüsselung der zu übertragenden Daten mittels orthogonaler Codes erfolgt.

6. Sende-/ Empfangseinrichtung (30) nach einem der Ansprüche 1 bis 5, **dadurch gekennzeichnet, dass** die Trennung der Kanäle untereinander durch eine Modulation der zu übertragenden Daten auf unterschiedliche Trägerfrequenzen erfolgt.

7. Sende-/ Empfangseinrichtung (30) nach einem der Ansprüche 1 bis 6, **dadurch gekennzeichnet, dass** zur Modulation der zu übertragenden Daten auf eine Trägerfrequenz eine differentielle binäre 2-Phasen Umtastung eingesetzt wird.

8. Sende-/ Empfangseinrichtung (30) nach einem der Ansprüche 1 bis 6, **dadurch gekennzeichnet, dass** zur Modulation der zu übertragenden Daten auf eine Trägerfrequenz eine differentielle Quadratur Phasen Umtastung eingesetzt wird.

## Claims

1. Transceiver device (30) for a component (31), of a motor vehicle which is connected to a communications network (34), having at least one transmitter unit (1) for transmitting data via the communications network (34) and having at least one receiver unit (20) for receiving data via the communications network (34), the communications network (34) serving to transmit data between the component (31) and other components (31) connected to the communications network (34), the transceiver device (30) having a plurality of transmitter units (1a, 1b, ..., 1m), each transmitter unit (1a, 1b, ..., 1m) making available at least one separate channel for transmitting data via the communications network (34) and/or the transceiver device (30) having a plurality of receiver units (20a, 20b, ..., 20n) each receiver unit (20a, 20b, ..., 20n) making available at least one separate channel for receiving data via the communications network (34), **characterized in that** the parallel operation of a plurality of bus systems on one medium is implemented using the plurality of transmitter units (1a, 1b, ..., 1m) and/or using the plurality of receiver units (20a, 20b, ..., 20n).

2. Transceiver device (30) according to Claim 1, **characterized in that** at least one of the channels is provided for transmitting and/or receiving data via a motor vehicle on-board power system (34), the motor vehicle on-board power system (34) serving to supply power to the component and to transmit data between the component (31) and other components (31) connected to the motor vehicle on-board power system (34).

3. Transceiver device (30) according to Claim 2, **characterized in that** the transmission and/or the reception of data via the motor vehicle on-board power system (34) is embodied as a fall-back level in order to maintain the transmission of data in the event of a failure of at least one of the channels which is provided for transmitting and/or receiving data via a communications network other than the motor vehicle on-board power system (34).

4. Transceiver device (30) according to Claim 2, **characterized in that** the motor vehicle on-board power system (34) serves to transmit safety-related data.

5. Transceiver device (30) according to one of Claims 1 to 4, **characterized in that** the channels are separated from one another by the data to be transmitted being encrypted by means of orthogonal codes.

6. Transceiver device (30) according to one of Claims 1 to 5, **characterized in that** the channels are separated from one another by the data to be transmitted being modulated onto different carrier frequencies.

7. Transceiver device (30) according to one of Claims 1 to 6, **characterized in that** differential binary 2-phase keying is used to modulate the data to be transmitted onto a carrier frequency.

8. Transceiver device (30) according to one of Claims 1 to 6, **characterized in that** differential quadrature phase keying is used to modulate the data to be transmitted onto a carrier frequency.

## Revendications

1. Dispositif d'émission/réception (30) pour un élément (31) d'un véhicule automobile raccordé à un réseau de communication (34), comprenant au moins une unité d'émission (1) destinée à envoyer des données sur le réseau de communication (34) et au moins une unité de réception (20) destinée à recevoir des données sur le réseau de communication (34), le réseau de communication (34) servant à transmettre des données entre l'élément (31) et d'autres éléments (31) raccordés au réseau de communication (34), dans lequel le dispositif d'émission/réception (30) présente plusieurs unités d'émission (1 a, 1b, ..., 1m) où chaque unité d'émission (1a, 1b, ..., 1m) dispose d'au moins un canal séparé pour transmettre des données sur le réseau de communication (34), et/ou le dispositif d'émission/réception (30) présente plusieurs unités de réception (20a, 20b, ..., 20n) où chaque unité de réception (20a, 20b, ..., 20n) dispose d'au moins un canal séparé pour recevoir des données sur le réseau de communication (34),
**caractérisé en ce que**
à l'aide des différentes unités d'émission (1a, 1b, ..., 1m) et/ou à l'aide des différentes unités de réception (20a, 20b, ..., 20n), on obtient un fonctionnement en parallèle de plusieurs systèmes bus sur un support.

2. Dispositif d'émission/réception (30) selon la revendication 1,
**caractérisé en ce qu'**
au moins un des canaux est prévu pour transmettre et/ou pour recevoir des données sur un circuit de bord (34) d'un véhicule automobile, ce circuit de bord (34) du véhicule automobile servant à alimenter l'élément en énergie et à transmettre des données entre l'élément (31) et d'autres éléments (31) raccordés au circuit de bord (34) du véhicule automobile.

3. Dispositif d'émission/réception (30) selon la revendication 2,
**caractérisé en ce que**
la transmission et/ou la réception de données sur le circuit de bord (34) du véhicule automobile sont configurées sur un plan d'inversion pour maintenir la transmission de données en cas de défaillance d'au moins un des canaux prévus pour transmettre et/ou pour recevoir des données sur un autre réseau de communication que le circuit de bord (34) du véhicule automobile.

4. Dispositif d'émission/réception (30) selon la revendication 2,
**caractérisé en ce que**
le circuit de bord (34) du véhicule automobile sert à transmettre des données relatives à la sécurité.

5. Dispositif d'émission/réception (30) selon l'une des revendications 1 à 4,
**caractérisé en ce que**
la séparation des canaux les uns au-dessous des autres s'effectue par un encodage des données à transmettre au moyen d'un code orthogonal.

6. Dispositif d'émission/réception (30) selon l'une des revendications 1 à 5,

**caractérisé en ce que**
la séparation des canaux les uns au-dessous des autres s'effectue par une modulation des données à transmettre sur différentes fréquences porteuses.

**7.** Dispositif d'émission/réception (30) selon l'une des revendications 1 à 6,
**caractérisé en ce que**
pour moduler les données à transmettre sur une fréquence porteuse, on utilise une modulation par déplacement de 2 phases binaires avec détection différentielle.

**8.** Dispositif d'émission/réception (30) selon l'une des revendications 1 à 6,
**caractérisé en ce que**
pour moduler les données à transmettre sur une fréquence porteuse, on utilise une modulation par déplacement de phase en quadrature avec détection différentielle.

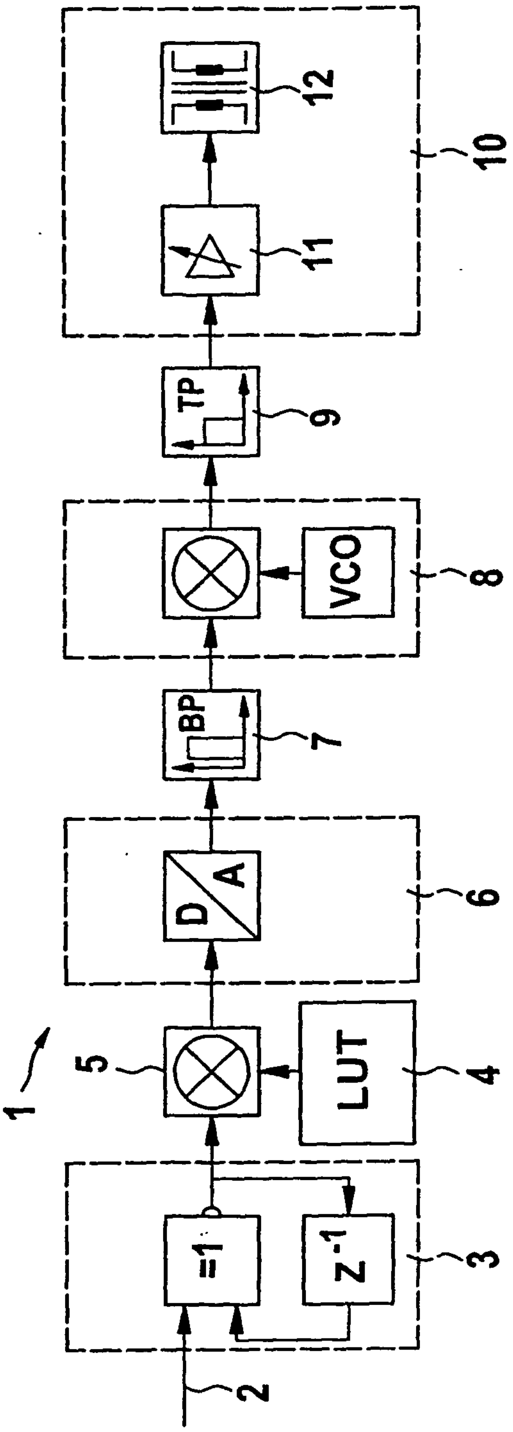
1
2
3
=1
Z-1
4
LUT
5
6
D
A
7
BP
8
VCO
9
TP
10
11
12

Fig. 1

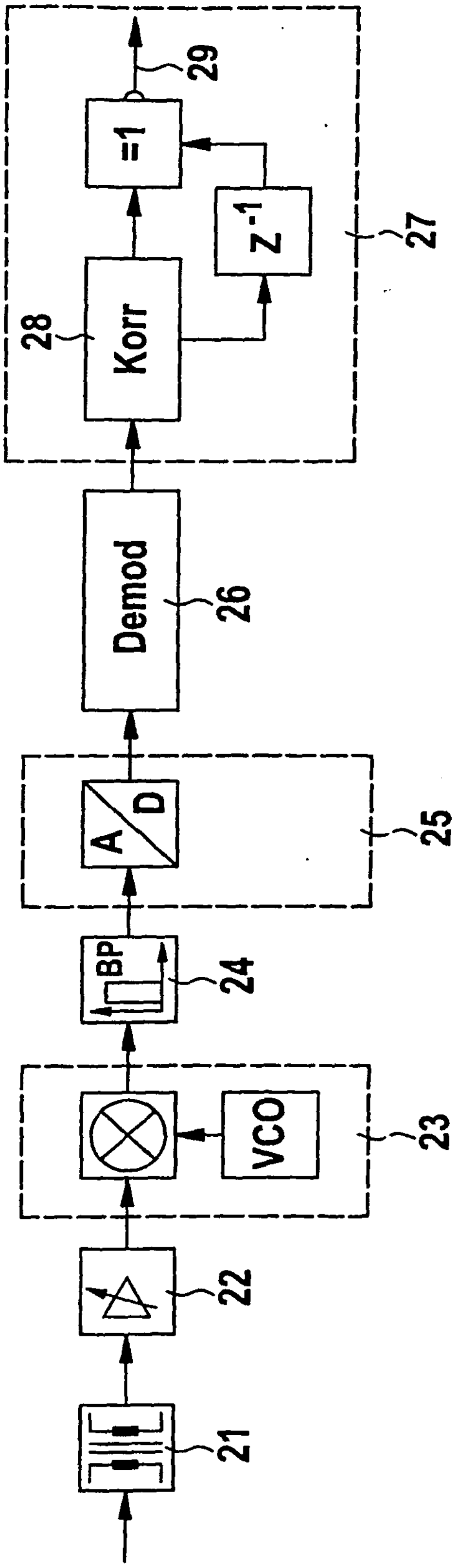
20
21
22
23
VCO
24
BP
25
A
D
26
Demod
27
28
Korr
Z-1
=1
29

Fig. 2

Fig. 3

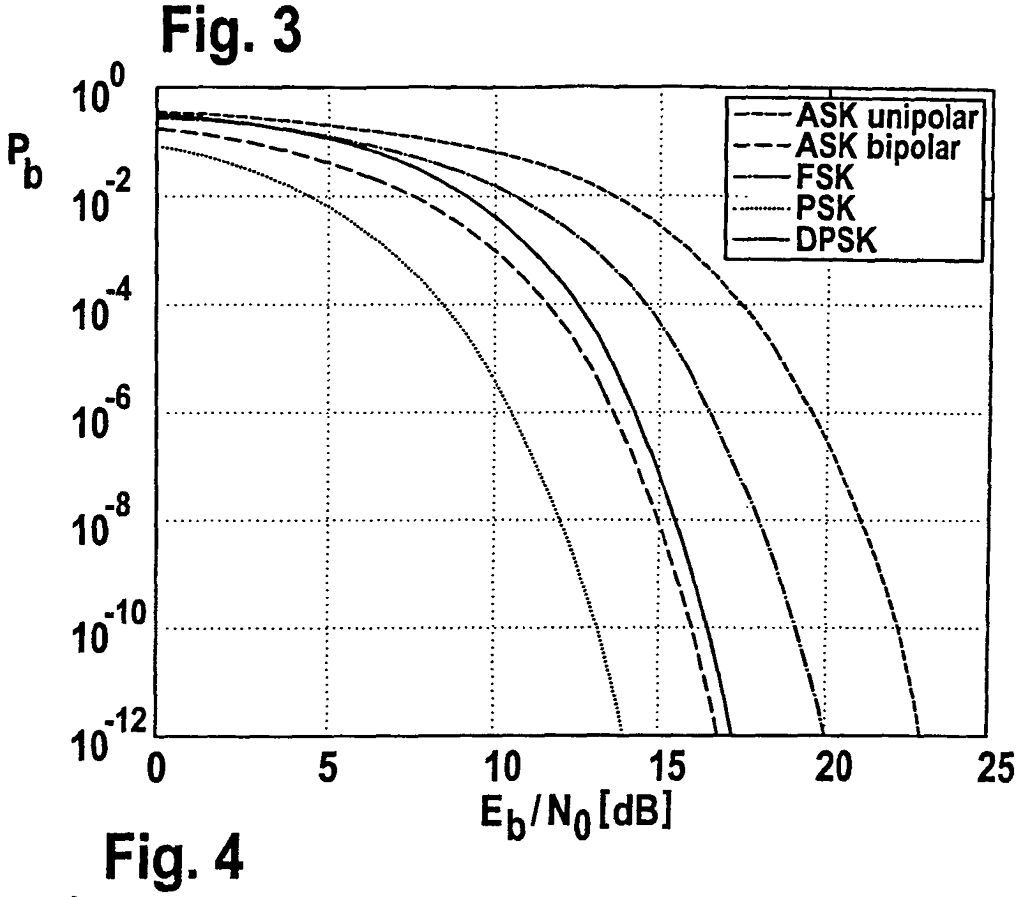
$10^0$
$P_b$
$10^{-2}$
$10^{-4}$
$10^{-6}$
$10^{-8}$
$10^{-10}$
$10^{-12}$
ASK unipolar
ASK bipolar
FSK
PSK
DPSK
0
5
10
15
20
25
$E_b/N_0$ [dB]

Fig. 4

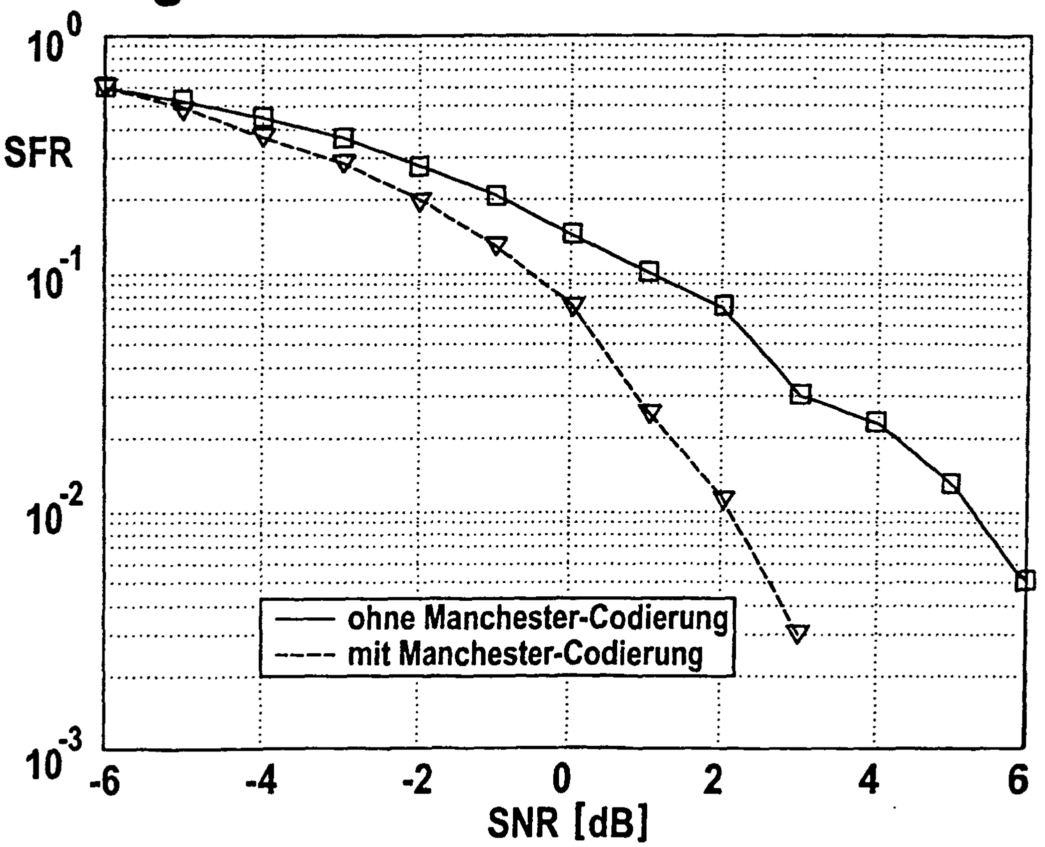
$10^0$
SFR
$10^{-1}$
$10^{-2}$
$10^{-3}$
ohne Manchester-Codierung
mit Manchester-Codierung
-6
-4
-2
0
2
4
6
SNR [dB]

Fig. 5

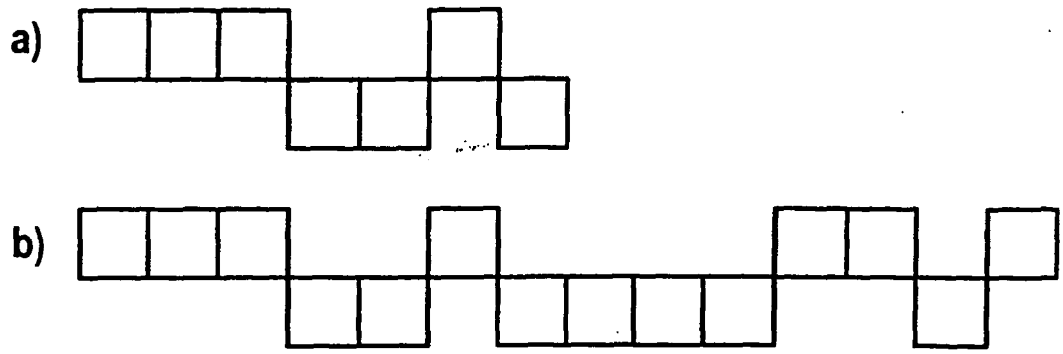
a)
b)

Fig. 6

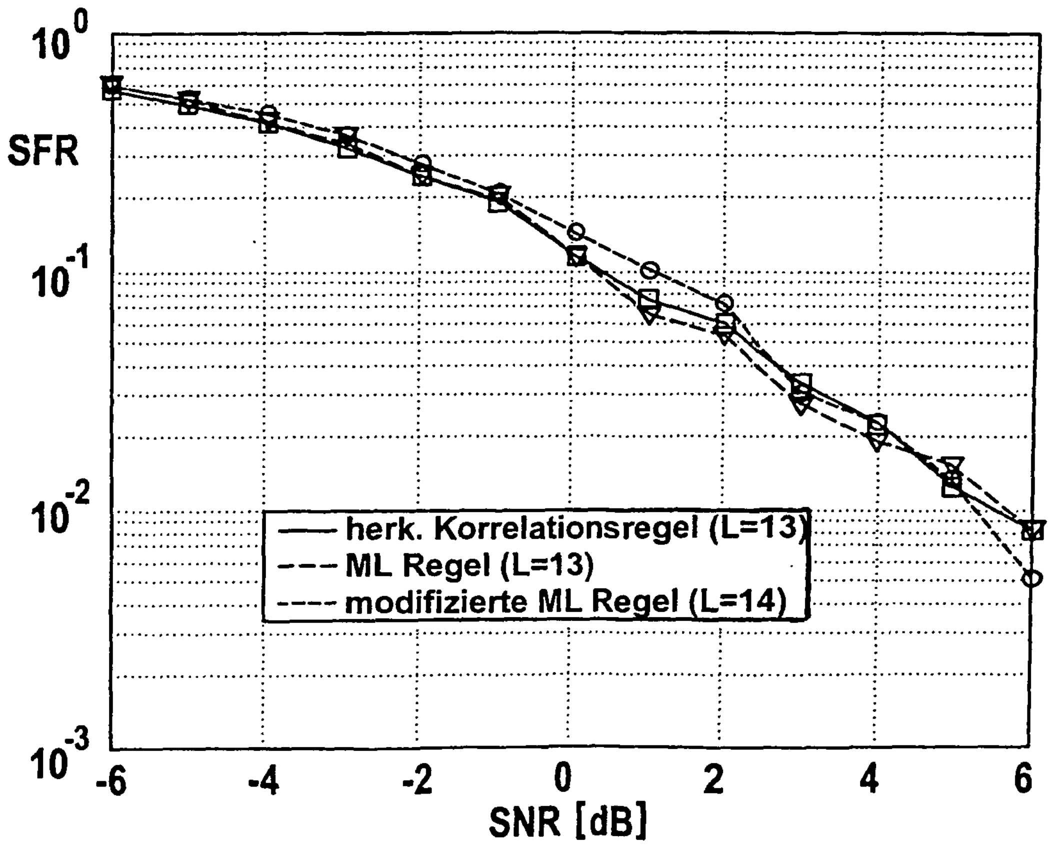
$10^0$
SFR
$10^{-1}$
$10^{-2}$
$10^{-3}$
-6
-4
-2
0
2
4
6
SNR [dB]
herk. Korrelationsregel (L=13)
ML Regel (L=13)
modifizierte ML Regel (L=14)

Fig. 7

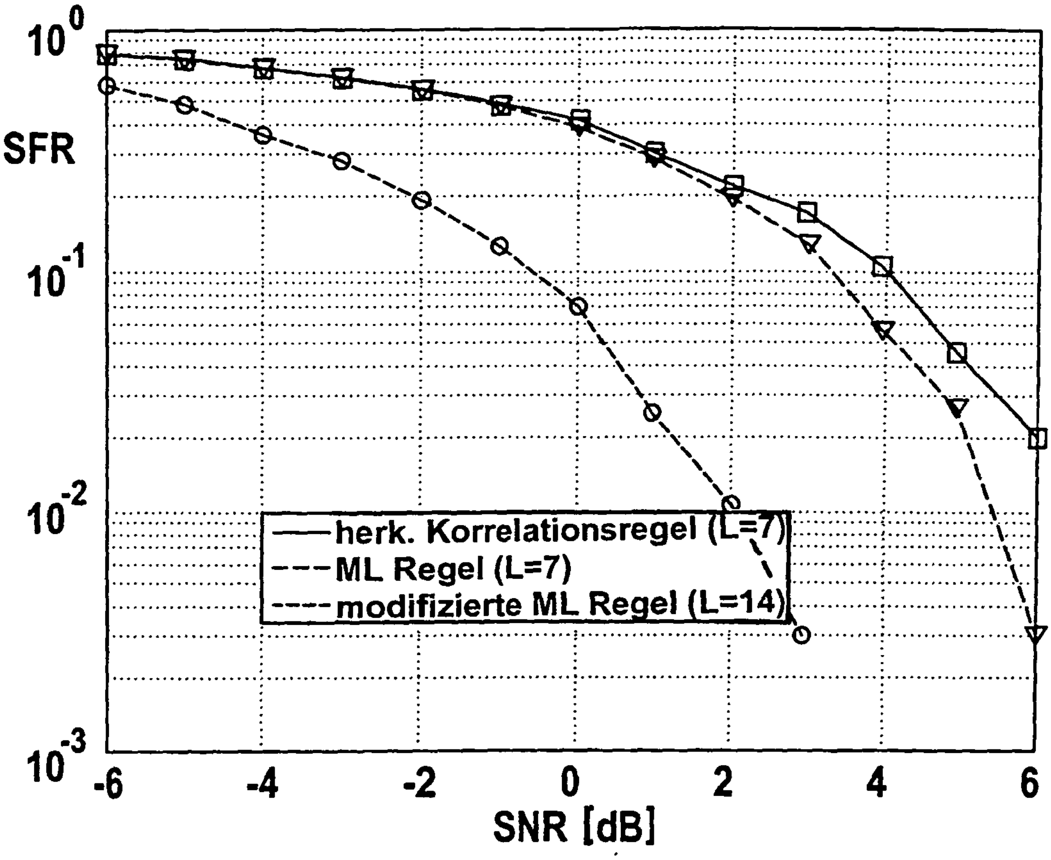
10^0
10^-1
10^-2
10^-3
SFR
-6
-4
-2
0
2
4
6
SNR [dB]
herk. Korrelationsregel (L=7)
ML Regel (L=7)
modifizierte ML Regel (L=14)

Fig. 8

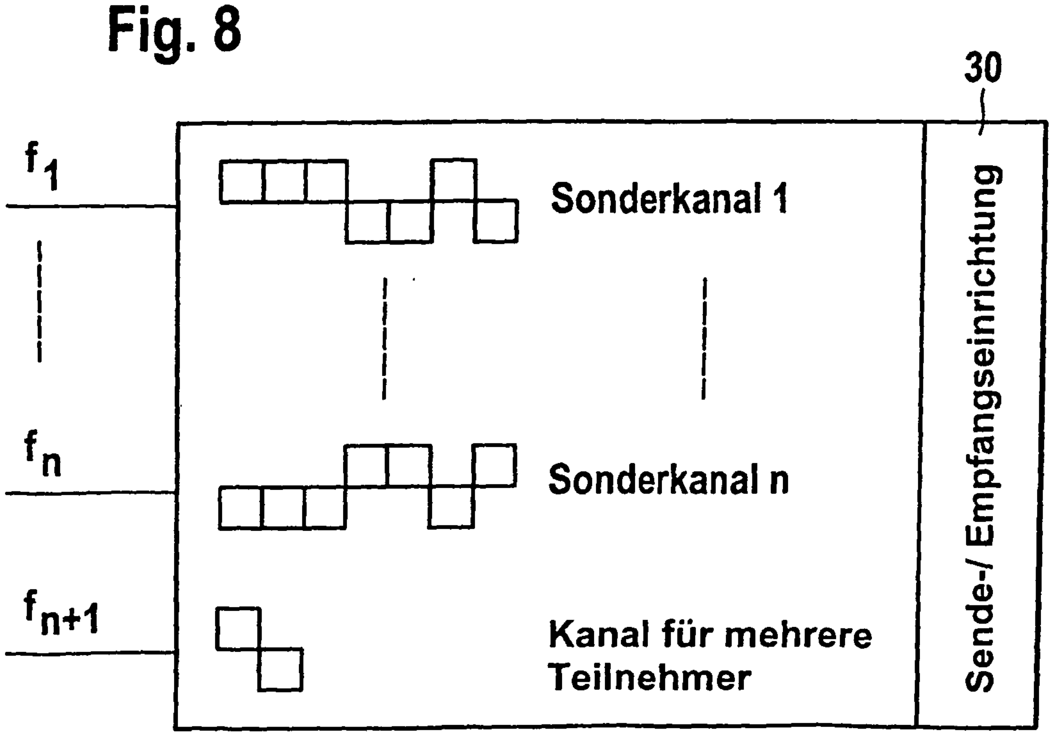
30
f1
fn
fn+1
Sonderkanal 1
Sonderkanal n
Kanal für mehrere Teilnehmer
Sende-/ Empfangseinrichtung

Fig. 9

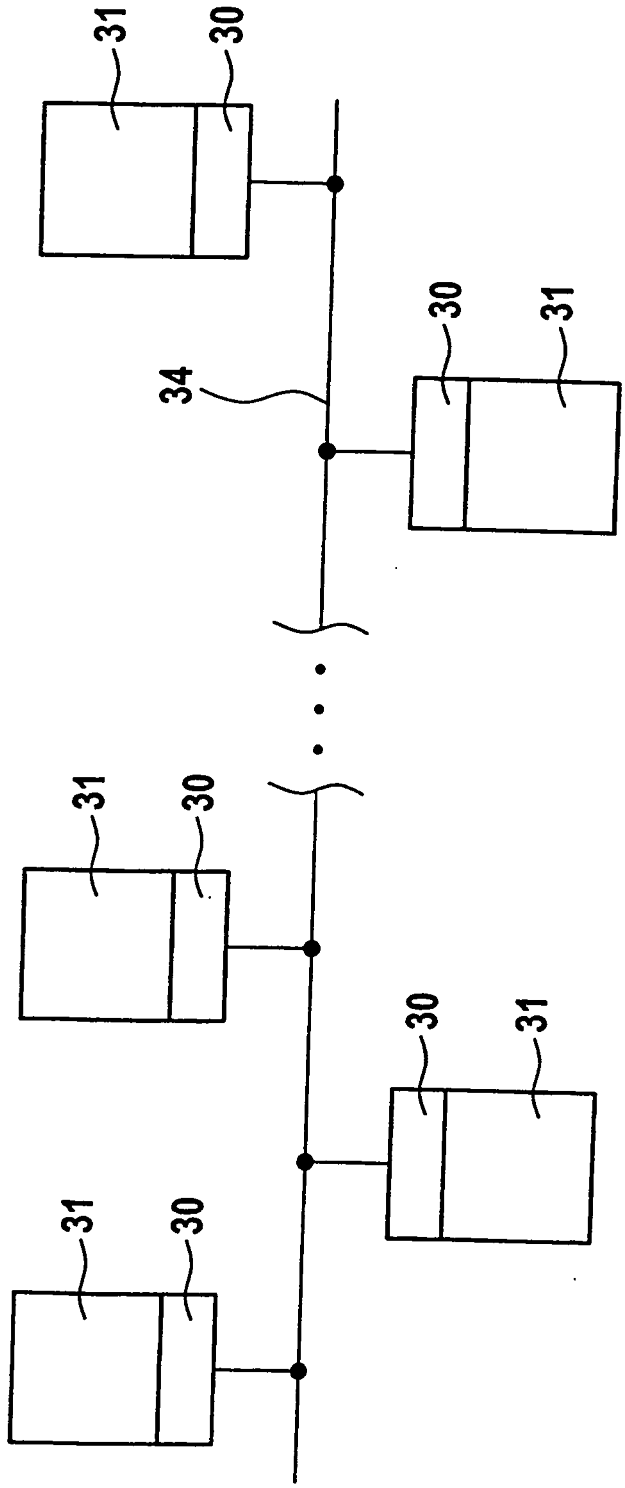

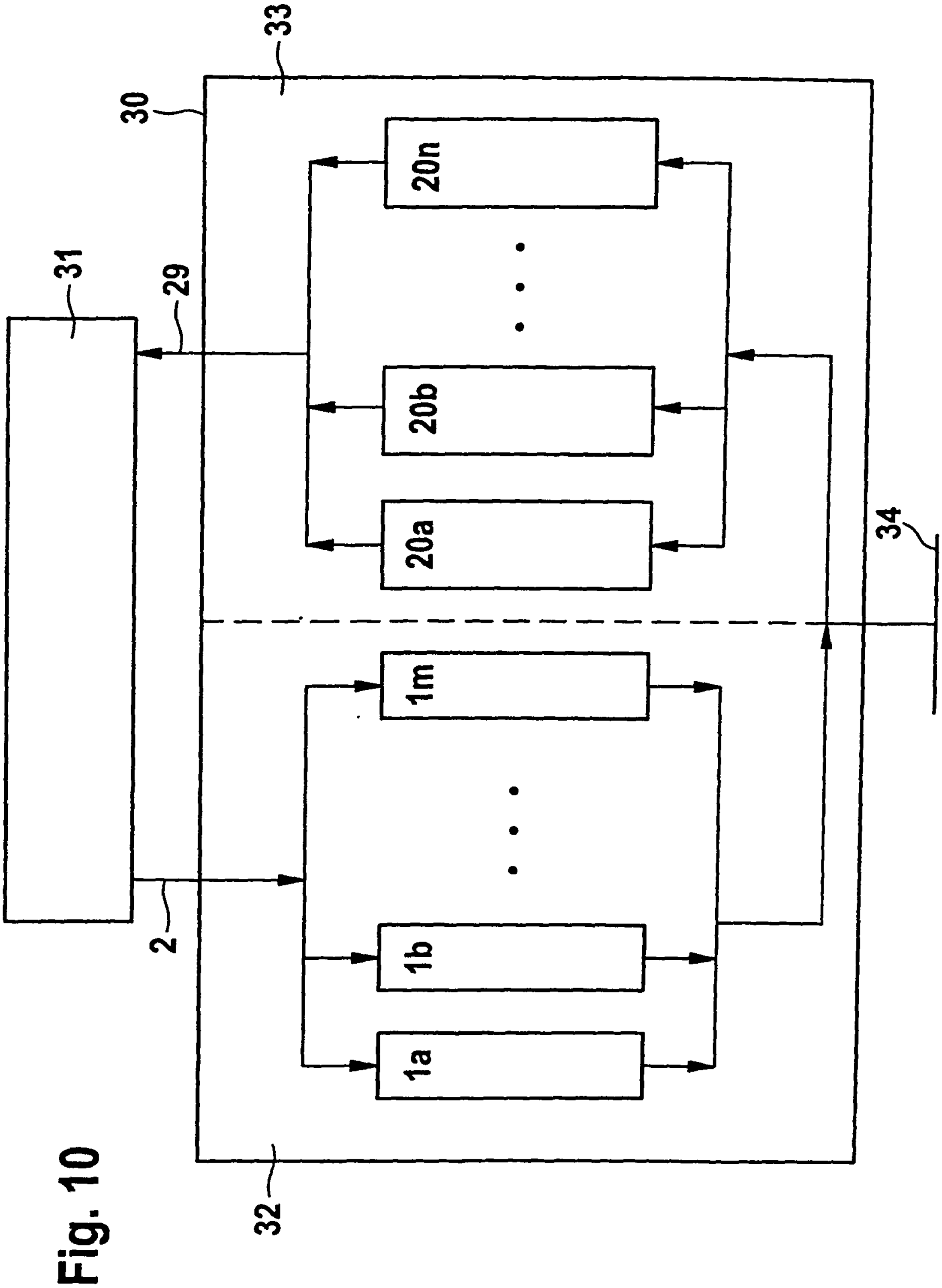


Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19913919 C1
- WO 03028305 A2
- DE 10142408
- DE 10142410


### In der Beschreibung aufgeführte Nicht-Patentliteratur


- **R. TURYN ; J. STORER.** On Binary Sequences. *Proceedings of American Mathematical Society,* 1961, (12
- **J. L. MASSEY.** Optimum Frame Synchronization. *IEEE Transactions on Communications,* 1972, vol. COM-20 (2
- **H. D. LÜKE.** Korrelationssignale. Springer-Verlag, 1992